(19) Europäisches Patentamt
European Patent Office
Office européen des brevets

(11) **EP 2 261 288 B1**

(12) **EUROPEAN PATENT SPECIFICATION**

(45) Date of publication and mention
of the grant of the patent:
**16.01.2019 Bulletin 2019/03**

(21) Application number: **10155595.1**

(22) Date of filing: **05.03.2010**

(51) Int Cl.:
*C09C 1/24* (2006.01)     *C09C 1/34* (2006.01)
*C09C 3/08* (2006.01)     *C09C 3/12* (2006.01)
*C08K 5/544* (2006.01)     *F24S 70/20* (2018.01)
*H01L 31/0216* (2014.01)

(54) **Aminosilane modified pigments for spectrally selective coatings, method for preparation and their use in coatings**

Aminosilanmodifizierte Pigmente für spektralselektive Beschichtungen, Verfahren zur Herstellung und deren Verwendung in Beschichtungen

Pigments modifiés par aminosilane pour des couches sélectives spectralement, methode pour préparation et leur usage en couches

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **22.05.2009 SI 200900147**

(43) Date of publication of application:
**15.12.2010 Bulletin 2010/50**

(73) Proprietors:
• **ALANOD GmbH & Co. KG**
**58256 Ennepetal (DE)**
• **HELIOS Tovarna barv, in umetnih smol Kolicevo, d.o.o.**
**1230 Domzale (SI)**

(72) Inventors:
• **Kozelj, Matjaz**
**1301, Krka (SI)**
• **Orel, Boris**
**1000, Ljubljana (SI)**
• **Steinbuecher, Miha**
**1241, Kamnik (SI)**
• **Jerman, Ivan**
**3305, Vransko (SI)**
• **Vodlan, Marjanca**
**1215, Medvode (SI)**

(74) Representative: **Patent- und Rechtsanwälte Dr. Solf & Zapf**
**Schlossbleiche 20**
**42103 Wuppertal (DE)**

(56) References cited:
**US-A1- 2003 018 103**

• **B. OREL, Z. C. OREL, A. KRAINER, M.G. HUTCHINS: "FTIR spectroscopic investigations and the thermal stability of thickness sensitive spectrally selective (TSSS) paint coatings" SOLAR ENERGY MATERIALS, vol. 22, 1991, pages 259-279, XP002581949**
• **OREL ET AL: "Silicone-based thickness insensitive spectrally selective (TISS) paints as selective paint coatings for coloured solar absorbers (Part I)" SOLAR ENERGY MATERIALS AND SOLAR CELLS, ELSEVIER SCIENCE PUBLISHERS, AMSTERDAM, NL LNKD-DOI:10.1016/J.SOLMAT.2006.07.013, vol. 91, no. 2-3, 11 November 2006 (2006-11-11), pages 93-107, XP005760334 ISSN: 0927-0248**
• **OREL ET AL: "Selective paint coatings for coloured solar absorbers: Polyurethane thickness insensitive spectrally selective (TISS) paints (Part II)" SOLAR ENERGY MATERIALS AND SOLAR CELLS, ELSEVIER SCIENCE PUBLISHERS, AMSTERDAM, NL LNKD-DOI:10.1016/J.SOLMAT.2006.07.012, vol. 91, no. 2-3, 11 November 2006 (2006-11-11), pages 108-119, XP005760335 ISSN: 0927-0248**

**(Cont. next page)**

EP 2 261 288 B1

- CRNJAK OREL Z: "Characterisation of high-temperature-resistant spectrally selective paints for solar absorbers" SOLAR ENERGY MATERIALS AND SOLAR CELLS, ELSEVIER SCIENCE PUBLISHERS, AMSTERDAM, NL LNKD- DOI:10.1016/S0927-0248(98)00181-0, vol. 57, no. 3, 1 March 1999 (1999-03-01), pages 291-301, XP004363841 ISSN: 0927-0248
- CRNJAK OREL Z C ET AL: "Spectrally selective paint coatings: Preparation and characterization" SOLAR ENERGY MATERIALS AND SOLAR CELLS, ELSEVIER SCIENCE PUBLISHERS, AMSTERDAM, NL LNKD-DOI:10.1016/S0927-0248(00)00367-6, vol. 68, no. 3-4, 1 June 2001 (2001-06-01) , pages 337-353, XP004230574 ISSN: 0927-0248
- CRNJAK OREL Z ET AL: "Spectrally selective solar absorbers in different non-black colours" SOLAR ENERGY MATERIALS AND SOLAR CELLS, ELSEVIER SCIENCE PUBLISHERS, AMSTERDAM, NL, vol. 85, no. 1, 1 January 2005 (2005-01-01), pages 41-50, XP025333174 ISSN: 0927-0248 [retrieved on 2005-01-01]

**Description**

This invention relates to aminosilane modified pigments, method of their preparation, coatings made with such pigments, their production and application. More specifically, invention relates to a procedure of using aminosilanes for the treatment of various black and coloured pigments with a view to modifying the pigments' surface properties, methods for obtaining the ensuing dispersions and making from them paints and coatings that show enhanced covering efficiency, enabling the preparation of black or coloured Thickness Sensitive Spectrally Selective, TSSS, and Thickness Insensitive Spectrally Selective, TISS, paint coatings, together with the method of their preparation and their use on metal and non-metal substrates.

Pigments treated with various amino functionalized silanes enable the preparation of pigment-binder dispersions with essentially improved properties, reflected in smaller particles, their more uniform distribution in organic vehicles, and also providing the compatibility of the pigments' particles with the polymer resin binder matrix, thus enabling the preparation of stable paint systems with enhanced pigment loading and higher hiding properties.

This invention is primarily paints suitable for obtaining coatings for solar absorbers, glazed and unglazed, metallic or non-metallic but it is in no way limited to them.


State of the art

The optical properties of any coatings are characterized by their transmittance, T, absorptance, A, and reflectance, R, values, $T + A + R = 1$, which can attain various values in different parts of the electromagnetic spectrum. Typical examples of frequency dependent $T(\lambda)$, $R(\lambda)$ and $A(\lambda)$ in the visible part of the solar spectrum, VIS/ 0.3-0.6 $\mu$m, are ordinary paints with various colours, the reflectance of which should only be controlled in this spectral region. Solar cool paints and near infrared camouflage coatings for military applications require careful tuning of the optical properties also in the Near IR, NIR/ 0.6-2.5 $\mu$m, spectral region, while for the spectrally selective coatings for solar absorbers and thermovision camouflage coatings for military applications, the corresponding $T(\lambda)$, $R(\lambda)$ and $A(\lambda)$ values must be adjusted over the entire spectral region from 0.3 to at least 50 $\mu$m, broad band spectral selectivity. In order to make coatings for the above mentioned applications it is essential to know the optical properties of the pigments and resin binders for each of the spectral regions.

Solar collector paints and corresponding coatings require pigments that exhibit high solar absorptance, $a_s$ ~0.94-0.95, values in the VIS and NIR solar regions. This is relatively easy to achieve by using black pigments, carbon soot, etc, since they show inherently high absorption in the entire solar spectrum. However, when such coatings are exposed to solar radiation and their temperature increases above the ambient temperature, up to 200 °C at stagnation conditions and up to 80 °C at operating temperatures for domestic solar heat water systems, the absorber surface starts to emit a large portion of its collected thermal energy in the form of thermal infrared radiation, $\lambda > 2.5$ $\mu$m. In order to decrease these thermal radiation losses, the thermal emittance of the solar absorber must be reduced as much as possible, $e_T < 0.10$ or less.

Accordingly, the main characteristic of spectrally selective coatings for solar absorbers is the difference between their solar absorptance, $a_S$, and thermal emittance, $e_T$. While high solar absorptance, $a_S$ ~0.94-0.95, values are relatively easy to achieve, more effort needs to be devoted to achieve low emittance of coatings.

So far, various strategies exist and have been developed to make black highly solar absorbing coatings that also exhibit low thermal emittance; the chemical vapour deposition technique, CVD, has proved to be the most effective deposition technique on metal, providing solar absorbers with $a_s$ ~0.93-0.95 and $e_T < 0.08$-0.05, depending on the metal used as a substrate. In principle, any black coating showing high $a_s$ values could be low emitting when it is deposited on a metallic substrate with low thermal emittance like copper, stainless steel, aluminium, zincated steel, etc. and its physical thickness is comparable or lower to the wavelength of the thermal radiation. This leads to Thickness Sensitive Spectrally Selective, TSSS, paint coatings.

Thin TSSS paint coatings made of black pigment embedded in polymeric resin binder fail in both aspects. The pigment loadings expressed by the pigment to volume ratio - PVC in paints are not as high as in TSSS coatings made by CVD processing, because the absorbing pigment particles do not form a percolated film. Inevitably, $a_s$ values drop below the values characteristic for the bulk pigment, usually well below 0.90. On the other hand, thermal emittance of even very thin TSSS paint coatings is inherently high, due to the absorption of the polymeric binder stemming from the vibrational modes of the polymer itself. The use of polymeric binder in paint coatings cannot be avoided, because it imparts to the coatings the necessary mechanical strength and other application properties. The problem of how to avoid a reduction of $a_s$ and an increase of $e_T$ values of thin TSSS paint coatings is reduced by making paints that enable the provision of a coating consisting of pigment particles arranged in a single layer, in which the pigment particles are laterally linked one to another with the smallest possible amount of polymer binder, probably in the form of a monomolecular layer. Such coatings would have the smallest thickness, equal to the diameter of the elementary particle size of pigment, and consist of closely packed pigment particles bonded together by an organic polymer binder. This can only be achieved with paints made of dispersions with uniformly and finely dispersed pigment particles.

The preparation of such pigment dispersions, with non-agglomerated and finely distributed uniform particles, is not easy and requires careful selection of dispersants capable of providing appropriate interactions with the pigment particle surface and, on the other hand, adequate compatibility with the polymer binder systems.

Organic dispersants are normally used for the production of commercial paints. The preparation of the pigment dispersion starts with the addition of the dispersant to the binder solution before the milling process of the pigment is commenced. This procedure is also common to all procedures related to the preparation of TSSS coatings, as described in Z. Crnjak Orel, N. Leskovšek, B. Orel, M. G. Hutchins, Spectrally selective silicon paint coatings : Influence of pigment volume concentration ratio on their optical properties. Sol. energy mater. sol. cells. [Print ed.], 1996, vol. 40, 197-204. A TSSS paint coating prepared with black spinel type pigment and silicone resin binder is described, demonstrating that the latter pigment provides coatings which have an essentially lower $e_T$ than coatings made with lamp black pigment. In the same paper, it is also shown that it is desirable to prepare paints with the highest possible PVC ratios, thus leading to maximized $a_S$ and minimal $e_T$ values, whereby the limiting factors are the adhesion and temperature stability of the coatings. Optimal PVC ratios are between 16 and 20 %, as stated by the authors, while the thickness of the applied coatings has been expressed with the weight in g of dry coating per unit of area in $m^2$, e.g., $2g/m^2$.

The commercial TSSS paint coating, Solarect-Z24®, is manufactured by Color d.d. (SI). The silicone polyester resin binder in a combination of black spinel pigment enables the production of temperature resistant and mechanically durable black TSSS paint coatings on various metals like copper and aluminium characterized by $a_S$= 0.90 and $e_T$= 0.30, values measured for a copper substrate, which is achieved by a coil-coating or spray application technique.

Production of non-black selective surfaces is highly desirable because of their decorative property. Good examples of their use are façade solar absorbers, passive cooling systems or military applications. Examination of the disclosed properties shows that coloured TSSS paint for solar collectors coatings suffer from either too low $a_s$ but $e_T$ values are adequate or $e_T$ and $a_s$ values are acceptable, i.e. having low $e_T$ and high $a_s$. In the latter case, the colour strength, C* of the coatings do not exceed values of about C* = 10, which indicates that the coatings are practically black or gray and thus lack colour. Strong colours, C* > 15-20, are obtained only for thick coatings, i.e having thickness of at least 2-4 $\mu$m, but such a high thickness inevitably leads to relatively high $e_T$ values, $e_T$ > 0.5. Solar absorptance is also low due to the strong reflection of colours in certain parts of the solar spectrum. The main reason that a high $a_s$ and low $e_T$ cannot be achieved in combination with high C* values is hiding efficiency of the pigments used is too small, stemming from the imperfect dispersal of the pigments in the organic polymer binder [Z. Crnjak Orel, M. Klanjšek Gunde, B. Orel, M. Köhl, Optical properties of black and green selective paints: stability studies of black painted spectrally selective coatings. In: EuroSun'96 proceedings, A. Goetzberger, J. Luther (Eds.), DGS-Sonnenenergie, Freiburg, Germany, 1996, p. 500-504; Z. Crnjak Orel, B. Orel, A. Lenček, M. Hutchins, Optical properties of black and mixed paint coating in different colour shade on Al-substrate. In: Eurosun 98, Book of Abstracts, (A. Kreiner, R. Perdan, Z. Kristl (Eds.), International Solar Energy Society - Slovenian Section, Ljubljana, 1998, p. III.1.3.; Z. Crnjak Orel, M. Klanjšek Gunde, Solar Energy Mater. Solar Cells, 61 (2000) 445-450.; Z. Crnjak Orel, M. Klanjšek Gunde, M. G. Hutchins, Solar Energy Mater. Solar Cells, 85 (2005) 41-50.]. Moreover, red TSSS paint coatings have not yet been reported.

TISS coatings which can be applied onto metal and non-metal surfaces have been developed over last two decades. Their spectral selectivity has been achieved by adding aluminium pigments and/or other metal and alloy pigments to the coating formulation. Notable publications on the matter have been published by Hoeflaak [M. Hoeflaak: Optimization of spectrally selective coatings for flat plate solar collectors, 8th International conference »Optimising paint formulation: preservation, stabilisation and care«, Amsterdam, November, 1988]. The lowest $e_T$ values achieved in the case of black coatings have been $e_T$ = 0.41, together with the highest solar absorptance of $a_S$ = 0.90.

The addition of non-black pigments or coloured metallic flake pigments to TISS coatings has yielded a series of non-black coatings with either low selectivity or low colour strength due to the less than satisfactorily hiding power of the pigments dispersions used B. Orel, H. Spreizer, L. Slemenik Perše, M. Fir, A. Šurca Vuka, D. Merlini, M. Vodlan, M. Köhl, Silicone-based thickness insensitive spectrally selective (TISS) paints as selective paint coatings for coloured solar absorbers (Part I), Solar Energy Materials & Solar Cells 91, 2007, 93-107 and B. Orel, H. Spreizer, A. Šurca Vuka, D. Merlini, M. Vodlan, M. Köhl, Selective paint coatings for coloured solar absorbers: Polyurethane thickness insensitive spectrally selective (TISS) paints (Part II), Solar Energy Materials & Solar Cells 91, 2007, 108-119]. The described coatings are the most suitable for thermal masking of objects and vehicles as camouflage coatings. However, due to the modest spectral selectivity, they are not the best choice TISS coatings for solar absorbers.

B. Orel et al, Solar Energy Materials, 1991, vol. 22, 259-279 discloses thickness sensitive spectrally selective (TSSS) paint coatings made from phenoxy resin and $FeMnCuO_x$ pigment. A silane coupling agent having the general formula $R_nSiX_{4-n}$ in which X is a hydrolisable group like -OR, $-NH_2$ or -Cl is used to bond the pigment to the phenoxy resin binder.

The object of the invention is to avoid the deficiencies of the known solutions and to provide production of paints and coatings that show enhanced covering efficiency, enabling the preparation of black or coloured Thickness Sensitive Spectrally Selective and Thickness Insensitive Spectrally Selective paint coatings.

The invention relates to a process for functionalisation of an inorganic pigment by aminosilane as defined in claim 1, a pigment paste as defined in claim 2, and the use of the functionalized pigment or the pigment paste to produce Thickness (In)Sensitive Spectrally Selective coatings as defined in claims 3 and 6.

Description of the invention and realised examples

Fig. 1. IR spectra of the bare untreated spinel black pigment (A), coated pigment functionalized with aminosilane (B) and amino silane used as dispersant (C).

Fig 2: SEM image of TSSS paint coating prepared with silane functionalized black spinel pigment, scale 10 $\mu$m.

Fig. 3: SEM image of TSSS paint coating prepared with black spinel pigment dispersed with Disperbyk 163® (BYK Chemie GmbH), scale 10 $\mu$m.

Fig. 4: Solar absorptance, $a_S$, as a function of the weight of the paint layer in $g/m^2$ for TSSS paint coatings described in Example 2. For comparison, the same data are given for the commercially available coating Solarect-Z24®, manufactured by Color d.d.,

Fig. 5: Thermal emittance, $e_T$, as a function of the weight of the paint layer in $g/m^2$ for the TSSS paint coatings described in Example 2. For comparison, the same data are given for the commercially available coating Solarect-Z24®, manufactured by Color d.d.,

The core of this invention is the functionalization of the inorganic pigment with aminosilane, performed by dispersing the pigment in a solution of aminosilane in solvent or various solvent mixtures together with the organic polymer binder, followed by the milling of pigment/aminosilane/solvent/binder dispersion. This process leads to firm and irreversible bonding of the silanes onto the pigment surface. Dispersions made of functionalized pigments enable the preparation of various paints appropriate for various applications, as described in the examples below and the patent claims.

Functionalisation of pigment particles with aminosilanes and evidence for the applied procedure

The pigments intended to be functionalized are of, but are not limited to, spinel and oxides of titanium, chromium, iron, zinc and the corresponding mixed oxides and oxyhydroxides. Solvents are preferably, but not limited to, aliphatic, cycloaliphatic, aromatic and heteroaromatic compounds, alcohol, ester, ether type or mixtures thereof.
The binders are preferably, but not limited to, silicone or substituted silicones polyurethanes and fluoro co-polymers or a mixture of corresponding binders.

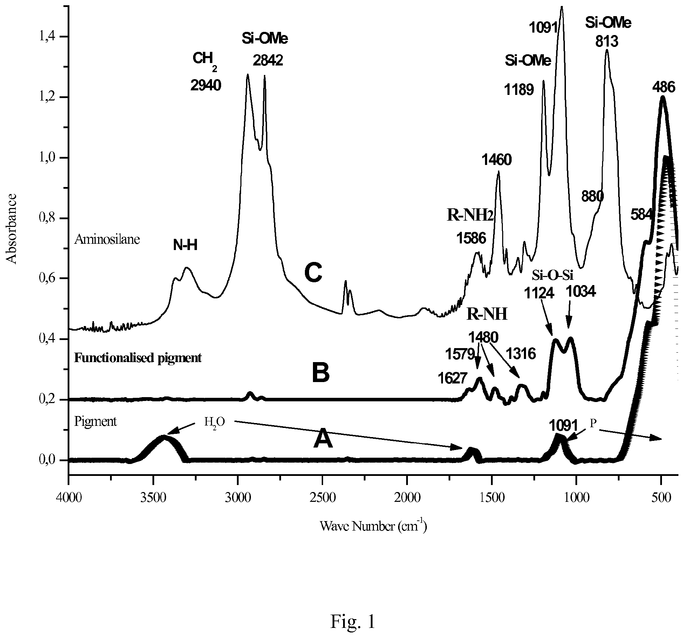

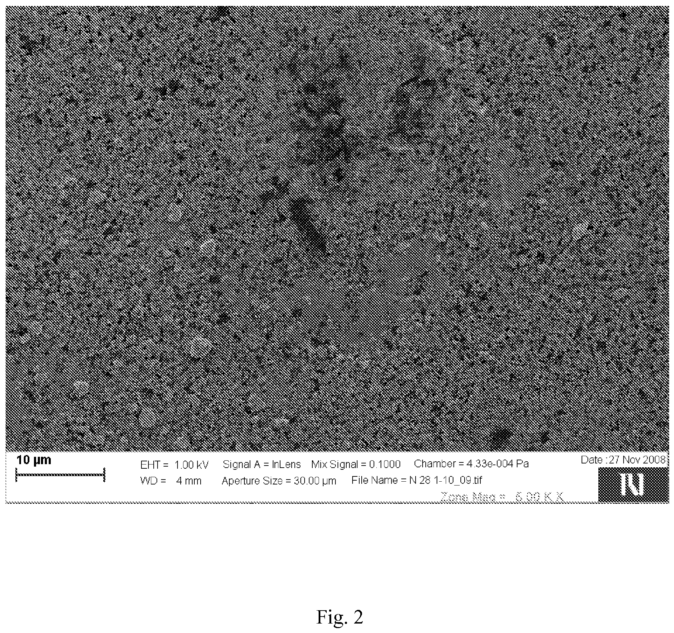

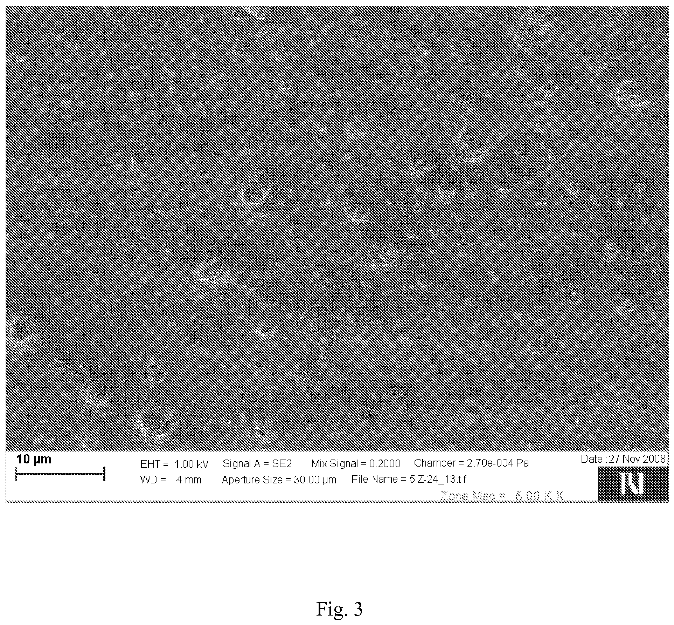

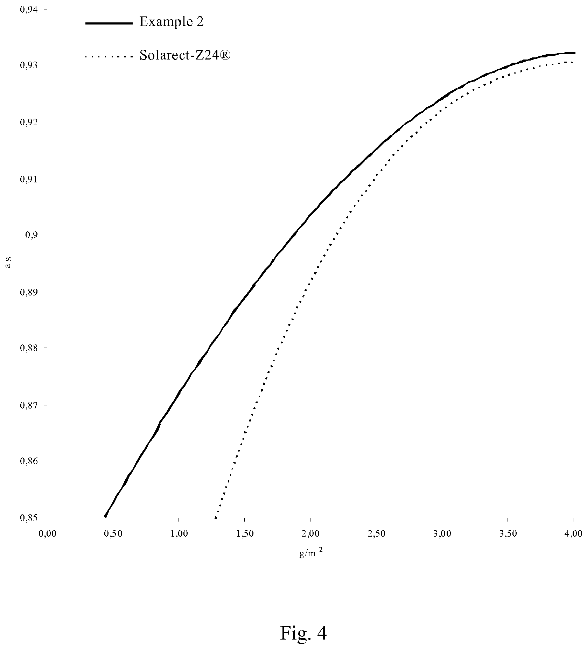

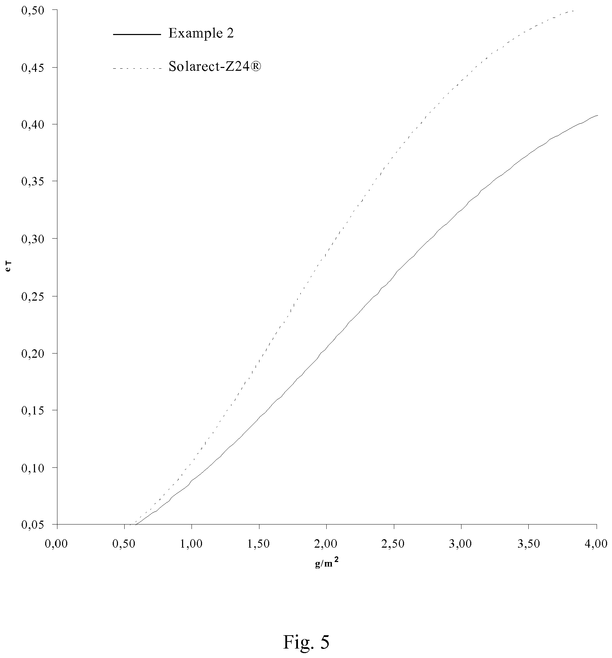

The key compounds of this invention are various aminosilanes described by the formula $Si \sum_n R_n \sum_m R_m$ where n+m = 4 and $R_n$ represents an un-substituted or substituted alkyloxy or cycloalkyloxy group of $C_1$ to $C_7$ or an un-substituted or substituted aryloxy or hetereroaryloxy 5-7 member ring group or chloro substituent, $R_m$ represents an amino or polyamino substituted alkyl or cykloalkyl group of $C_1$ to $C_{18}$ or aminosubstituted aryl or hetereroaryl 5-7 member ring. In addition, the aminosilane could be an oligomere of such a compound.
Additives are compounds or mixtures of them added to paint formulations in an amount of 10 % or less of the total formulation, which serve to improve the dispersion process, the application of the dispersed pigments and the adjustment of specific properties of the paints and the ensuing coatings such as, but not limited to, their rheological, surface and adhesion properties. The term additive does not comprise dispersal agents.
The procedure for inorganic pigment functionalization with aminosilanes consists of dispersing the pigment in a solution of 0.05-30 % of the aminosilane by weight of the pigment, in a solvent or solvent binder mixture for 5 minutes to 6 hours. Dispersal may be followed by grinding of the said dispersion to the desired fineness. In order to improve the efficiency of dispersal and or milling the pigments, a suitable amount of binder and/or standard additives may be included in the formulations.
The functionalisation of an inorganic pigment by aminosilanes is demonstrated by three interrelated but independent sets of results: (i) infrared spectra of functionalized pigments (Fig. 1), (ii) the state of dispersions obtained after the application of aminosilane dispersants (Fig. 2 and 3) and (iii) the optical properties of the paint coatings (Fig. 4 and 5) prepared from the corresponding pigment dispersions.

(i) The first experiment undoubtedly proves that the aminosilanes bond onto the surface of the pigment particle during the dispersal and subsequent milling of the pigment in the aminosilane-solvent-resin binder solution.

Fig. 1 shows the IR spectra of the bare 24-3060 PK pigment (Ferro GmbH) (A), pigment functionalized with aminosilane (B) and aminosilane (C). For example, in the spectrum of the bare pigment, in addition to the bands attributed to the pigment indicated by P weak bands of the water were seen due to the moisture present in untreated commercial pigment. The presence of moisture is important, since it triggers hydrolysis of the aminosilane which leads to the formation of the silanol groups required for achieving condensation of the aminosilane directly onto the surface of the pigment.

The functionalized pigment was taken out of the reaction mixture and immediately thoroughly rinsed with solvent in order to remove all the non-bonded species from its surface, then the IR spectra (Fig. 1B) was recorded. In the IR spectra, the characteristic absorption bands of the amino groups, marked R-NH, were recognized, together with bands attributed to the siloxane groups, marked Si-O-Si. The frequencies of the R-NH and the Si-O-Si bands shifted and changed their intensities, clearly demonstrating the condensation of the hydrolyzed aminosilane and its bonding to the pigment surface. Because the IR spectra of the surface functionalized pigment (Fig. 1B) showed bands of the condensation products of the hydrolysis-condensation reactions of the aminosilane (Fig. 1C), it was impossible to rule out the possibility of self-condensation of aminosilane molecules. However, self-condensed aminosilane species did not detrimentally impact on the effectiveness of the pigment particles' functionalization, but merely indicated that a thicker thicker aminosilane layer formed during the bonding and dispersal process. Accordingly, the IR spectra proved the formation of a pigment wrapped by variously interlinked aminosilane moieties via the Si-O-Si bonds, thus excluding the existence of two separated and non-interacting pigment and aminosilane phases.

(ii) The second experiment shows the difference in morphology of dispersions of aminosilane-functionalised and non-functionalized pigments.

Two pigment dispersions with the same PVC ratios were made by dispersion, and subsequently ground to the same fineness < 1 $\mu$m, measured according to ISO 1524. Both dispersions were applied in the form of thin layer onto the metal substrate and allowed to dry and cure to harden. Comparison of the corresponding SEM micrographs (Fig. 2 and 3) shows that the pigment particles are more evenly distributed in the dispersion prepared with the aminosilane-functionalized pigment, which can be inferred from the even distribution and smaller size of the pigment particles, while the SEM micrographs of the paint dispersions made of non-functionalized pigment showed lumps and regions in which the pigment particles were agglomerated and their distribution was not uniform.

(iii) This experiment provided the final and the most convincing proof of the effective modification of the pigments' surface by aminosilane dispersants. Two different TSSS paint coatings were applied onto a copper substrate by spraying in order to make TSSS coatings with various thicknesses. The first, called Example 2, was based on the aminosilane-functionalized pigment corresponding to the paint described in Example 2, while the second one, called Solarect Z-24®, corresponded to commercial Solarect Z-24® TSSS paint coatings manufactured by Color d.d. (SI). The thickness of the deposited TSSS paint coatings was controlled by altering the amount of solvent added to the prepared paints and was expressed by the weight of dry paint per m$^2$. The paints were first dried and then temperature cured and their $a_s$ and $e_T$ values were then determined from the measured hemispherical IR reflection spectra. The results shown in Fig. 4 and 5 reveal that the coatings made of the paint (Example 2) with the functionalized pigments exhibited higher solar absorptance and lower thermal emittance values than the Solarect Z-24® paint coatings with the same physical thickness. Higher solar absorptance values indirectly proved that the covering efficiency of the paints made from the aminosilane treated pigment dispersions was higher than those made of the commercial Solarect Z-24® coatings (Fig. 5). The beneficial effect of functionalized pigment can also be understood from Fig. 4 , which shows the variation of thermal emittance values of the commercial Solarect Z-24® and Example 2 coatings as a function of the coating thickness expressed in grams of dry paint film per m$^2$. The thermal emittance of the coatings made of functionalized pigment dispersion clearly exhibited lower $e_T$ values than the thermal emittance of the commercial Solarect Z-24® paint coatings. The beneficial effect of the aminosilane treatment on thermal emittance values was more pronounced, up to 10 %, than on solar absorptance values, 1-3%, when the same coating thicknesses were considered. To conclude, the results showed that the use of aminosilane for the paint preparation resulted in increased solar absorptance and simultaneous reduction of the thermal emittance of the coatings. In other words, the former TSSS coatings exhibited higher spectral selectivity.

The preparation of the aminosilane-functionalised pigments and dispersions

Aminosilane functionalised pigments can be isolated after functionalisation by filtering the dispersion, washing it with solvents and then drying the washed pigment. Other separation methods, subject to practicability or their availability, can also be used.

Pigment pastes could be prepared from aminosilane functionalised pigments in much the same way as pastes made of other non-functionalized pigments: functionalisation can be preformed, preferably at the earliest possible stage, in the production of the pastes or an isolated functionalised pigment can be used.

For functionalised pigment paints, pigments can be functionalised *in situ* during preparation of the paint. It is recommended that pigment functionalisation be performed at the earliest possible stage in the production process. Alternatively, functionalized pigment paste or an isolated functionalised pigment can be used.

In general, the preparation procedure for functionalized pigment dispersions followed common procedures used in the paint industry.

The application and usage of aminosilane functionalised pigments for making paints: TSSS and TISS spectrally selective coatings

Due to their enhanced covering efficiency and the ability to form stable pigment dispersions with much higher pigment loadings than ordinary paints, aminosilane-functionalised pigments are suitable for the manufacture of any paint coatings in which high pigment loadings combined with excellent mechanical stability and specific optical effects, such as high solar absorptance and low thermal emittance are desired. TSSS and TISS paint coatings for solar absorbers are typical examples of their application.

- Black TSSS paint coatings for solar absorbers with spectral selectivity as high as $a_S = 0.91$, $e_T = 0.06$ and good adhesion and thermal stability can be made by using aminosilane functionalised pigments. Coloured, i.e., non-black or gray, TSSS coatings for solar absorbers, where their aesthetic appearance is important, with spectral selectivity as high as $a_S = 0.85$, $e_T = 0.18$ and colour strength of C*=18, retaining good adhesion and thermal stability, can be made by using aminosilane functionalised pigments. All the aforementioned TSSS paint coatings should have a solid matter content, i.e., aminosilane functionalised pigment, of 30-75 %, 25-70 % of binder, 0-40 % of other pigments and 0-10 % additives.
- TSSS paints can be applied to a metal or a metalized surface by spraying, coil-coating or dip-coating.
- Black and gray TISS coatings for solar absorbers suitable for solar collector systems with spectral selectivity as high as $a_S = 0.91$ and $e_T = 0.35$, and coloured, i.e., non-black or gray, TISS paint coatings for solar absorbers with spectral selectivity as high as $a_S = 0.84$, $e_T = 0.40$ and colour strength ranging from C* = 10 up to C*=20, can be made by using aminosilane modified pigment dispersions. Regardless their colour, TSSS and TISS paint coatings offer excellent coatings, showing good adhesion, thermal and UV stability and excellent corrosion resistance and moderate abrasion resistance. TISS coatings should have a solid matter content of at least 5 % aminosilane functionalized pigment, 10-50% metal flakes of either natural look or coloured, 0-40 % other pigments, 25-70 % binder and 0-10 % additives.
- Aminosilane functionalized pigments offer an excellent choice for thermovision camouflage paints for military applications for moving or stationary objects and are characterized by a broad frequency response from 0.3 up to 50 $\mu$m and the ability to provide camouflage in the form of a single coat of the paint. Their shade can be adjusted in terms of the need to make an object with low observance in various environments like marine, earth, snow, deserts, forests, with the ability to reduce the the radiative temperature by at least 50%. They offer good adhesion, thermal and UV stability and excellent corrosion resistance, and adequate abrasion resistance for this application. Their optical properties in the VIS, NIR and thermal IR parts of the electromagnetic spectrum ensure good blending with the surroundings. Their typical composition is similar to those used for coloured TISS paint coatings: at least 5 % aminosilane functionalized pigment, 10-50% metal flakes of either natural look or coloured, 0-40 % other pigments, 25-70 % binder and 0-10 % additives.
- TISS paints can be applied to a metal or a non-metal surface by spraying, coil-coating or dip-coating.
- Aminosilane functionalised pigments, such as titanium dioxide or zinc oxide, are suitable for making solar cool paints and as micro-fillers for transparent lacquers and bulk commodity plastics.

The invention is additionally explained by the following examples, which are in no way limiting.

Example 1

General procedure for a 45 % pigment paste made of aminosilane functionalised pigment and silicone-polyester binder

| | |
|---|---|
| Silikoftal® Non-stick 60 (Evonik Tego Chemie GmbH) | 170 g |
| An inorganic pigment | 450 g |
| Bentone® SD-2 (Elementis Specialties, Inc.) | 10 g |
| [3-(2-aminoethyl)aminopropyl]trimetoxysilane | 25 g |
| Xilene | 230 g |
| n-butilacetate | 115 g |

An inorganic pigment is gradually added to a solution of [3-(2-aminoethyl)aminopropyl]trimethoxysilane in xylene under continuous dispersion. When the addition has been completed, dispersion is continued for a further 15 minutes, then 150 g Silikoftal® Non-stick 60 is added under constant dispersion, followed by Bentone® SD-2 and dispersion continued for a further 15 minutes. The obtained dispersion is milled in a sand mill at approximately ~ 3000 RPM to a particle size < 1 $\mu$m (ISO 1524). n-butilacetate is added under constant dispersion.

### Example 2

Black silicone-polyester TSSS coating prepared from an aminosilane functionalised pigment paste

| | |
|---|---|
| 45 % black aminosilane functionalised pigment paste made according to Example 1 with 24-3060 PK pigment (Ferro GmbH) | 890 g |
| Silikoftal® Non-stick 60 (Evonik Tego Chemie GmbH) | 110 g |

Silikoftal® Non-stick 60 is added under constant dispersion to a 45 % black aminosilane functionalised pigment paste made according to Example 1 with 24-3060 PK pigment (Ferro GmbH).
A coating prepared in such a way, suitably diluted, can be applied by coil- coating or spray coating methods. The deposited coating is hardened by heating at 200-250 °C for 10-20 min, or for a longer time at lower temperatures, if the substrate requires such a reduction of the curing temperature.
By spraying the paint onto a copper substrate, the prepared coating with an equivalent thickness of 1 g/m$^2$ has adhesion of Gt0 (ISO 2409), and its spectral selectivity is denoted by $a_S$ = 0.91 and $e_T$= 0.06

### Example 3

Black 2-component polyurethane TSSS coating

| | |
|---|---|
| Desmophen® A 365 (Bayer MaterialScience AG) | 240 g |
| 24-3060 PK (Ferro GmbH) | 381 g |
| Bentone® SD-2 (Elementis Specialties, Inc.) | 13 g |
| 3-aminopropyltrimethoxysilane | 13 g |
| Xylene | 168 g |
| n-butylacetate | 91 g |
| BYK® 410 (BYK-Chemie GmbH) | 3 g |
| Desmodur® N 75 (Bayer MaterialScience AG) | 91 g |

Component A is prepared by gradually adding black pigment 24-3060 PK to a solution of 3-aminopropyltrimethoxysilane in xylene under continuous dispersion. After adding has been completed, mixing continues for a further 15 minutes, then 150 g Desmophen® A 365 is also added under constant dispersion, followed by Bentone® SD-2 and dispersion continued for a further 15 minutes. The obtained dispersion is milled in a sand mill at approximately 3000 RPM to a particle size < 1 $\mu$m (ISO 1524). While continuously dispersing, a further 90 g Desmophen® A 365, butylacetate and BYK® 410 are added to the paste.
Prior to use, component A of the coating prepared in such a way is mixed with component B, Desmodur® N75.
A coating prepared in such a way, suitably diluted, can be applied by coil-coating or spray coating methods.
By spraying the paint onto a copper substrate, the prepared coating with an equivalent thickness of 1 g/m$^2$ has adhesion of Gt0 (ISO 2409), and its spectral selectivity is denoted by $a_S$ = 0.92 in $e_T$= 0.18

Example 4

Black silicone-polyester TISS coating prepared from an aminosilane functionalised pigment paste

| | |
|---|---|
| 45 % black aminosilane functionalised pigment paste made according to Example 1 with 24-3060 PK pigment (Ferro GmbH) | 327 g |
| Alubright 3100 (Schlenk Metallic Pigments GmbH) | 274 g |
| BYK® 410 (BYK-Chemie GmbH) | 10 g |
| 4-hydroxy-4-methylpentan-2-one | 12 g |
| Silikoftal® Non-stick 60 (Evonik Tego Chemie GmbH) | 245 g |
| *n*-butylacetate | 50 g |
| Solvesso® 100 (Exxon Mobil Corporation) | 50 g |
| Additol® XL 186 (Cytec Industries inc.) | 32 g |

The 45 % black aminosilane functionalised pigment paste made according to Example 1 with 24-3060 PK pigment (Ferro GmbH) is slowly worked into Alubright 3100 and Silikoftal® Non-stick 60, 4-hydroxy-4-methylpentan-2-one, n-butylacetate, Solvesso® 100, Additol® XL 186 and BYK® 410 are added under constant dispersion.

A coating prepared in such a way, suitably diluted, can be applied by the coil-coating or spray coating methods.

When properly applied by the spray coating method, a coating prepared in such a way with a thickness of 30 to 100, $\mu$m has adhesion of Gt0 (ISO 2409) and its spectral selectivity is denoted by $a_S$ = 0.90 in $e_T$ = 0.35.

Example 5

Brick red silicone-polyester TSSS coating prepared from aminosilane functionalised pigment pastes

| | |
|---|---|
| 45 % red aminosilane functionalised pigment paste made according to Example 1 with Bayferrox 130M pigment (LANXESS Deutschland GmbH) | 855 g |
| 45 % black aminosilane functionalised pigment paste made according to Example 1 with 24-3060 PK pigment (Ferro GmbH) | 95 g |
| Silikoftal® Non-stick 60 (Evonik Tego Chemie GmbH) | 50 g |

The 45 % black aminosilane functionalised pigment paste made according to Example 1 with 24-3060 PK pigment (Ferro GmbH) and Silikoftal® Non-stick 60 is added under constant dispersion to 45 % red aminosilane functionalised pigment paste made according to Example 1 with Bayferrox 130M pigment (LANXESS Deutschland GmbH).

A coating prepared in such a way, suitably diluted, can be applied by the coil-coating or spray coating methods. The deposit is hardened by heating at 200-250 °C for 10-20 min, or longer at lower temperatures if the substrate requires such a reduction.

A coating prepared in such a way, properly sprayed onto a copper substrate with a gramature (thickness) of 2 g/m$^2$, has adhesion of GtO (ISO 2409), its spectral selectivity is denoted by $a_S$ = 0.85 and $e_T$ = 0.18 and its color strength is denoted by C* = 18.

Example 6

Blue silicone-polyester TISS coating prepared from an aminosilane functionalised pigment paste and colored metal pigment

| | |
|---|---|
| 45 % black aminosilane functionalised pigment paste made according to Example 1 with 24-3060 PK pigment (Ferro GmbH) | 58 g |
| Standart® Alucolor Blau 1504 (Eckart GmbH & Co. KG) | 232 g |
| BYK® 410 (BYK-Chemie GmbH) | 4 g |
| 4-hydroxy-4-methylpentan-2-one | 8 g |
| Silikoftal® Non-stick 60 (Evonik Tego Chemie GmbH) | 234 g |
| Methoxypropylacetate | 174 g |
| Solvesso® 100 (Exxon Mobil Corporation) | 174 g |
| Color Uni pasta Violet RL (Color d.d.) | 116 g |

The 45 % black aminosilane functionalised pigment paste made according to Example 1 with 24-3060 PK pigment (Ferro GmbH) is slowly worked into Standart® Alucolor Blau 1504 (Eckart GmbH & Co. KG) and, under constant dispersion, Silikoftal® Non-stick 60, 4-hydroxy-4-methylpentan-2-one, n-butylacetate, Solvesso® 100, Additol® XL 186 and BYK® 410 are added.

A coating prepared in such a way, suitably diluted, can be applied by coil-coating or spray coating methods.

When properly applied by the spray coating method, a coating prepared in such a way with a thickness of 30 to 100 $\mu$m has adhesion of GtO (ISO 2409), its spectral selectivity is denoted by $a_S = 0.87$ in $e_T = 0.43$ and its color strength is denoted by $C^* = 17$.

Example 7

Olive green silicone-polyester TISS coating prepared from an aminosilane functionalised pigment pastes

| | |
|---|---|
| 45 % green aminosilane functionalised pigment paste made according to Example 1 with GN-M pigment (LANXESS Deutschland GmbH) | 216 g |
| 45 % yellow aminosilane functionalised pigment paste made according to Example 1 with with Bayferrox 3920 pigment (LANXESS Deutschland GmbH) | 110 g |
| 45 % black aminosilane functionalised pigment paste made according to Example 1 with 24-3060 PK pigment (Ferro GmbH) | 80 g |
| Alubright 3100 (Schlenk Metallic Pigments GmbH) | 310 g |
| BYK® 410 (BYK-Chemie GmbH) | 10 g |
| 4-hydroxy-4-methylpentan-2-one | 12 g |
| Silikoftal® Non-stick 60 (Evonik Tego Chemie GmbH) | 150 g |
| n-butylacetate | 40 g |
| Solvesso® 100 (Exxon Mobil Corporation) | 40 g |
| Additol® XL 186 (Cytec Industries inc.) | 328 g |

All three 45 % aminosilane functionalised pigment pastes made according to Example 1 are slowly worked into Alubright 3100 and, under constant dispersion, Silikoftal® Non-stick 60, 4-hydroxy-4-methylpentan-2-one, n-butylacetate, Solvesso® 100, Additol® XL 186 and BYK® 410 are added.

A coating prepared in such a way, suitably diluted, can be applied by coil-coating or spray coating methods.

When properly applied by the spray coating method, a coating prepared in such a way with a thickness of 30 to 100 $\mu$m has adhesion of GtO (ISO 2409), its spectral selectivity is denoted by $a_S = 0.83$ in $e_T = 0.42$ and its color strength is denoted by $C^* = 13$.

**Claims**

1. A procedure for functionalisation of an inorganic pigment by aminosilane for use in spectrally selective coatings **characterized by**
dispersing pigment in a solution of an aminosilane in a solvent or a mixture of a solvent and a binder
without an addition of a non-aminosilane dispersing agent with or without subsequent grinding
and with the use of 0.05-30 % (w/w) of aminosilane on pigment and use of an aromatic, aliphatic, cycloaliphatic, ketone, ester, ether or alcohol compound or a mixture thereof as the solvent
and use of a silicone-polyester, polyurethane or fluoropolymer binder, whereas the said procedure is performed either *in-situ* during preparation of a paint for use in coating or by involving pigment paste production
or followed by an isolation of the aminosilane functionalised pigment.

2. A pigment paste **characterized by** a solid matter content of:

   - a pigment functionalised by procedure from Claim 1 within the range of 30 to 90 % (w/w),
   - a binder within the range of 7 to 70 % (w/w),
   - additives such as but not limited to rheological additives within the range of 0 to 10 % (w/w).

3. Use of a pigment functionalised by the procedure from Claim 1 and/or use of the pigment paste from Claim 2 to produce a Thickness Sensitive Spectrally Selective (TSSS) coating on metal or non-metal substrates, **characterized**

**by**

a solid matter content of:

- a pigment functionalised by a procedure from Claim 1
within the range of 30 to 75 % (w/w),
- a binder within the range of 25 to 70 % (w/w),
- other pigments within the range of 0 to 40 % (w/w),
- fillers within the range of 0 to 30 % (w/w),
- additives such as but not limited to rheological additives within the range of 0 to 10% (w/w).

4. Use according to Claim 3 **characterized by** the use of a silicon-polyester polymer or a polyurethane or a fluoropolymer or a mixture thereof as the binder.

5. Use according to Claim 3 or 4 to produce a Thickness Sensitive Spectrally Selective (TSSS) surface on a metal such as but not limited to copper, aluminium or stainless steel or on a metalised polymer or other metalised surface, wherein the coating is applied by spraying, dip-coating or coil-coating.

6. Use of a pigment functionalised by the procedure from Claim 1 and/or use of the pigment paste from Claim 2 to produce a Thickness Insensitive Spectrally Selective (TISS) coating on metal or non-metal substrates **characterized by**

a solid matter content of:

- a pigment functionalised by a procedure from Claim 1
of at least 5 % (w/w),
- metal flakes within the range of 10 to 50 % (w/w),
- other pigments within the range of 0 to 40 % (w/w),
- binder within the range of 25 to 70 % (w/w),
- fillers within the range of 0 to 30 % (w/w),
- additives such as but not limited to rheological additives within the range of 0 to 10% (w/w).

7. Use according to Claim 6 **characterized by** the use of coated metal flakes and/or by the use of a silicon-polyester polymer and/or polyurethane and/or fluoropolymer as the binder.

8. Use according to Claim 6 or 7 to produce a Thickness Insensitive Spectrally Selective surface on a metal such as but not limited to copper, aluminium or stainless steel or on a metalised substrate or a non-metal substrate wherein the coating is applied by spraying, dip-coating or coil-coating.

**Patentansprüche**

1. Verfahren zur Funktionalisierung eines anorganischen Pigments durch Aminosilan zur Verwendung in spektralselektiven Schichten,
**dadurch gekennzeichnet, dass**
das Pigment dispergiert wird in einer Lösung eines Aminosilans in einem Lösemittel oder in einem Gemisch aus einem Lösemittel und einem Bindemittel
ohne Zugabe eines Nicht-Aminosilan-Dispergiermittels mit oder ohne anschließende Vermahlung
und unter Verwendung von 0,05 bis 30 % (Gew./Gew.) des Aminosilans am Pigment
und unter Verwendung einer aromatischen, aliphatischen, cycloaliphatischen, Keton-, Ester-, Ether- oder Alkoholverbindung oder einer Mischung davon als das Lösemittel
und unter Verwendung eines Silikon-Polyesters, Polyurethans oder Fluorpolymerbindemittels,
wobei das Verfahren durchgeführt wird
entweder *in situ* während der Zubereitung eines Anstrichs zur Herstellung einer Beschichtung
oder unter Einsatz einer Pigmentpasten-Herstellung oder gefolgt von einer Isolierung des durch Aminosilan funktionalisierten Pigments.

2. Pigmentpaste **gekennzeichnet durch** einen Feststoffgehalt an

- einem Pigment, das nach einem Verfahren gemäß Anspruch 1 funktionalisiert ist, im Bereich von 30 bis 90 % (Gew./Gew.),
- einem Bindemittel im Bereich von 7 bis 70 % (Gew./Gew.),
- Additiven, wie etwa, aber nicht beschränkt auf, rheologische Additive, im Bereich von 0 bis 10 % (Gew./Gew.).

3. Verwendung eines nach Anspruch 1 funktionalisierten Pigments und/oder einer Pigmentpaste nach Anspruch 2 zur Herstellung einer dickensensiblen, spektral-selektiven (TSSS-)Beschichtung auf metallischen oder nichtmetallischen Substraten,
**gekennzeichnet durch** einen Feststoffgehalt an:

- einem nach einem Verfahren gemäß Anspruch 1 funktionalisiertem Pigment im Bereich von 30 bis 75 % (Gew./Gew.),
- einem Bindemittel im Bereich von 25 bis 70 % (Gew./Gew.),
- anderen Pigmenten im Bereich von 0 bis 40 % (Gew./Gew.),
- Füllstoffen im Bereich von 0 bis 30 % (Gew./Gew.),
- Additiven, wie etwa, aber nicht beschränkt auf, rheologische Additive, im Bereich von 0 bis 10 % (Gew./Gew.).

4. Verwendung nach Anspruch 3, **gekennzeichnet durch** die Verwendung eines Silikon-Polyester-Polymers, eines Polyurethans oder eines Fluorpolymers oder einer Mischung derselben als Bindemittel.

5. Verwendung nach Anspruch 3 oder 4 zur Herstellung einer dickensensiblen, spektral-selektiven (TSSS-)Beschichtung auf einem Metall, wie etwa, aber nicht beschränkt auf, Kupfer, Aluminium oder rostfreiem Stahl, oder auf einem metallisierten Polymer oder auf einer anderen metallisierten Oberfläche, wobei die Beschichtung durch Sprühen, Tauchen oder als Bandbeschichtung aufgetragen wird.

6. Verwendung eines nach Anspruch 1 funktionalisierten Pigments und/oder einer Pigmentpaste nach Anspruch 2 zur Herstellung einer dickenunsensiblen, spektral-selektiven (TISS-)Beschichtung auf metallischen oder nichtmetallischen Substraten,
**gekennzeichnet durch** einen Feststoffgehalt an:

- einem nach einem Verfahren gemäß Anspruch 1 funktionalisiertem Pigment von mindestens 5 % (Gew./Gew.),
- Metall-Flakes im Bereich von 0 bis 50 % (Gew./Gew.),
- anderen Pigmenten im Bereich von 0 bis 40 % (Gew./Gew.),
- Bindemitteln im Bereich von 25 bis 70 % (Gew./Gew.),
- Füllstoffen im Bereich von 0 bis 30 % (Gew./Gew.),
- Additiven, wie etwa, aber nicht beschränkt auf, rheologische Additive, im Bereich von 0 bis 10 % (Gew./Gew.).

7. Verwendung nach Anspruch 6, **gekennzeichnet durch** die Verwendung von beschichteten Metall-Flakes und/oder die Verwendung eines Silikon-Polyester-Polymers und/oder eines Polyurethans und/oder eines Fluorpolymers als Bindemittel.

8. Verwendung nach Anspruch 6 oder 7 zur Herstellung einer dickenunsensiblen, spektral-selektiven (TISS-)Beschichtung auf einem Metall, wie etwa, aber nicht beschränkt auf, Kupfer, Aluminium oder rostfreiem Stahl, oder auf einem metallisierten Polymer oder auf einer anderen metallisierten Oberfläche, wobei die Beschichtung durch Sprühen, Tauchen oder als Bandbeschichtung aufgetragen wird.

## Revendications

1. Procédé pour la fonctionnalisation par un aminosilane d'un pigment inorganique destiné à être utilisé dans des revêtements à sélectivité spectrale **caractérisé par**
la dispersion de pigment dans une solution d'un aminosilane dans un solvant ou un mélange d'un solvant et d'un liant sans un ajout d'un agent dispersant non-aminosilane avec ou sans broyage subséquent
et avec l'utilisation de 0,05-30 % (p/p) d'aminosilane par rapport au pigment et
l'utilisation d'un composé aromatique, aliphatique, cycloaliphatique, cétone, ester, éther ou alcool ou d'un mélange de ceux-ci en tant que solvant et
l'utilisation d'un liant silicone-polyester, polyuréthane ou polymère fluoré,
ledit procédé étant effectué

soit *in situ* pendant la préparation d'une peinture destinée à être utilisée en revêtement

soit par l'inclusion de la production de pâte de pigment soit suivi d'un isolement du pigment fonctionnalisé par l'aminosilane.

**2.** Pâte de pigment **caractérisée par** une teneur en matière solide constituée de :

- un pigment fonctionnalisé par le procédé selon la revendication 1 dans la plage de 30 à 90 % (p/p),
- un liant dans la plage de 7 à 70 % (p/p),
- des additifs tels que, mais ils n'y sont pas limités, des additifs rhéologiques dans la plage de 0 à 10 % (p/p).

**3.** Utilisation d'un pigment fonctionnalisé par le procédé selon la revendication 1 et/ou utilisation de la pâte de pigment selon la revendication 2 pour produire un revêtement à sélectivité spectrale sensible à l'épaisseur (TSSS) sur des substrats métalliques ou non métalliques, **caractérisée par** une teneur en matière solide constituée de :

- un pigment fonctionnalisé par un procédé selon la revendication 1 dans la plage de 30 à 75 % (p/p),
- un liant dans la plage de 25 à 70 % (p/p),
- d'autres pigments dans la plage de 0 à 40 % (p/p),
- des charges dans la plage de 0 à 30 % (p/p),
- des additifs tels que, mais ils n'y sont pas limités, des additifs rhéologiques dans la plage de 0 à 10 % (p/p).

**4.** Utilisation selon la revendication 3 **caractérisée par** l'utilisation d'un polymère silicone-polyester ou d'un polyuréthane ou d'un polymère fluoré ou d'un mélange de ceux-ci en tant que liant.

**5.** Utilisation selon la revendication 3 ou 4 pour produire une surface à sélectivité spectrale sensible à l'épaisseur (TSSS) sur un métal tel que, mais il n'y est pas limité, le cuivre, l'aluminium ou l'acier inoxydable ou sur un polymère métallisé ou une autre surface métallisée, le revêtement étant appliqué par vaporisation, revêtement au trempé ou enduction de bandes en continu.

**6.** Utilisation d'un pigment fonctionnalisé par le procédé selon la revendication 1 et/ou utilisation de la pâte de pigment selon la revendication 2 pour produire un revêtement à sélectivité spectrale sensible à l'épaisseur (TISS) sur des substrats métalliques ou non métalliques, **caractérisée par** une teneur en matière solide constituée de :

- un pigment fonctionnalisé par un procédé selon la revendication 1 d'au moins 5 % (p/p),
- des paillettes métalliques dans la plage de 10 à 50 % (p/p),
- d'autres pigments dans la plage de 0 à 40 % (p/p),
- du liant dans la plage de 25 à 70 % (p/p),
- des charges dans la plage de 0 à 30 % (p/p),
- des additifs tels que, mais ils n'y sont pas limités, des additifs rhéologiques dans la plage de 0 à 10 % (p/p).

**7.** Utilisation selon la revendication 6 **caractérisée par** l'utilisation de paillettes métalliques revêtues et/ou par l'utilisation d'un polymère silicone-polyester et/ou de polyuréthane et/ou de polymère fluoré en tant que liant.

**8.** Utilisation selon la revendication 6 ou 7 pour produire une surface à sélectivité spectrale sensible à l'épaisseur sur un métal tel que, mais il n'y est pas limité, le cuivre, l'aluminium ou l'acier inoxydable ou sur un substrat métallisé ou un substrat non métallique, le revêtement étant appliqué par vaporisation, revêtement au trempé ou enduction de bandes en continu.

Fig. 1

| 10 µm | EHT = 1.00 kV | Signal A = InLens | Mix Signal = 0.1000 | Chamber = 4.33e-004 Pa | Date :27 Nov 2008 |
| | WD = 4 mm | Aperture Size = 30.00 µm | File Name = N 28 1-10_09.tif | | |
| | | | | Zena Mag = 6.00 K X | |

Fig. 2

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Spectrally selective silicon paint coatings : Influence of pigment volume concentration ratio on their optical properties. **Z. CRNJAK OREL ; N. LESKOVŠEK ; B. OREL ; M. G. HUTCHINS.** Sol. energy mater. sol. cells. 1996, vol. 40, 197-204
- Optical properties of black and green selective paints: stability studies of black painted spectrally selective coatings. **Z. CRNJAK OREL ; M. KLANJŠEK GUNDE ; B. OREL ; M. KÖHL.** EuroSun'96 proceedings. DGS-Sonnenenergie, 1996, 500-504
- Optical properties of black and mixed paint coating in different colour shade on Al-substrate. **Z. CRNJAK OREL ; B. OREL ; A. LENČEK ; M. HUTCHINS.** Eurosun 98. International Solar Energy Society, 1998, III.1.3
- **Z. CRNJAK OREL ; M. KLANJŠEK GUNDE.** *Solar Energy Mater. Solar Cells,* 2000, vol. 61, 445-450
- **Z. CRNJAK OREL ; M. KLANJŠEK GUNDE ; M. G. HUTCHINS.** *Solar Energy Mater. Solar Cells,* 2005, vol. 85, 41-50

- **M. HOEFLAAK.** Optimization of spectrally selective coatings for flat plate solar collectors. *8th International conference »Optimising paint formulation: preservation, stabilisation and care«,* November 1988
- **B. OREL ; H. SPREIZER ; L. SLEMENIK PERŠE ; M. FIR ; A. ŠURCA VUKA ; D. MERLINI ; M. VODLAN, M. KÖHL.** Silicone-based thickness insensitive spectrally selective (TISS) paints as selective paint coatings for coloured solar absorbers (Part I). *Solar Energy Materials & Solar Cells,* 2007, vol. 91, 93-107
- **B. OREL ; H. SPREIZER ; A. ŠURCA VUKA ; D. MERLINI ; M. VODLAN ; M. KÖHL.** Selective paint coatings for coloured solar absorbers: Polyurethane thickness insensitive spectrally selective (TISS) paints (Part II). *Solar Energy Materials & Solar Cells,* 2007, vol. 91, 108-119
- **B. OREL et al.** *Solar Energy Materials,* 1991, vol. 22, 259-279